# EUROPÄISCHE PATENTSCHRIFT

(11) **EP 2 413 012 B1**
(45) Veröffentlichungstag und Bekanntmachung des Hinweises auf die Patenterteilung: **08.03.2017**
(21) Anmeldenummer: 11173921.5
(22) Anmeldetag: 14.07.2011
(51) Int. Cl.: F16L 37/092

(54) **Steckverbindung**
Connector
Connecteur à fiches

(30) Priorität: 31.07.2010 DE 102010032983
(43) Veröffentlichungstag der Anmeldung: 01.02.2012
(73) Patentinhaber: VAG-Armaturen GmbH, 68305 Mannheim (DE)
(72) Erfinder: Kunzmann, Thomas, 75045 Walzbachtal (DE)
(74) Vertreter: Charrier Rapp & Liebau

(56) Entgegenhaltungen:
- EP-A1- 2 169 293
- WO-A1-2006/019238
- KR-Y1- 200 220 136
- KR-Y1- 200 242 197
- US-A- 1 921 709

## Beschreibung

Die Erfindung betrifft eine Steckverbindung nach dem Oberbegriff des Anspruchs 1.

Eine derartige Steckverbindung ist aus der WO 2006/019238 A1 bekannt. Diese enthält ebenfalls ein Gehäuse mit einer Aufnahmeöffnung zum Einsetzen eines Anschlussrohrs und ein in der Aufnahmeöffnung angeordnetes Anschlussteil zur Halterung des Anschlussrohrs im Gehäuse. Das Anschlussteil umfasst ein Stützelement und mehrere Klemmsegmente, die konische Außenflächen zur Anlage an einer konischen Innenfläche der Aufnahmeöffnung enthalten. Das hülsenförmige Stützelement enthält mehrere durch Haltestege voneinander getrennte Aussparungen, in welche die Klemmsegmente eingesetzt sind.

Aufgabe der Erfindung ist es, eine Steckverbindung der eingangs genannten Art zu schaffen, die eine vereinfachte Montage und Demontage ermöglicht.

Diese Aufgabe wird durch eine Steckverbindung mit den Merkmalen des Anspruchs 1 gelöst. Zweckmäßige Weiterbildungen und vorteilhafte Ausführungsformen der Erfindung sind Gegenstand der Unteransprüche.

Bei der erfindungsgemäßen Steckverbindung weisen die voneinander beabstandeten Haltezungen an ihrer Außenseite konische Außenflächen zur Anlage an der konischen Innenfläche der Aufnahmeöffnung auf. Dadurch wird eine gute Klemmwirkung erzielt. Außerdem sind die Klemmsegmente des Klemmelements an einem Bundring angeformt. Durch einfaches axiales Zusammenstecken von Klemm- und Stützelement kann so eine einfache Montage des Anschlussteils erreicht werden.

Durch das Zusammenwirken von Klemm- und Stützelement wird eine sichere Halterung des Anschlussrohr und einem einfache Montage- bzw. Demontage auch ohne Spezialwerkzeuge ermöglicht. Das in Art einer Spannzange ausgebildete Klemmelement gewährleistet eine gute und sichere Klemmung, während das Stützelement mit den in die Schlitze des Klemmelements eingreifenden Haltezungen eine übermäßige Deformation der Klemmsegmente und dadurch eine Verformung des Anschlussrohres verhindert. Durch axiale Verschiebung des Klemmelements und des Stützelements kann die Steckverbindung einfach vorgespannt bzw. gelöst werden.

Eine besonders gute Klemmung kann dadurch erreicht werden, dass an der Innenseite der Klemmsegmente Haltezähne vorgesehen sind.

In einer fertigungstechnisch vorteilhaften Ausführung sind das Klemmelement und das Stützelement aus Kunststoff hergestellt. Sie können aber auch aus einem anderen geeigneten Material gefertigt sein.

Dem Klemmelement ist zweckmäßigerweise ein als Schutzmanschette ausgebildetes Sicherungselement zugeordnet. Durch dieses Sicherungselement werden einerseits die innerhalb des Gehäuses angeordneten Teile der Steckverbindung vor Verschmutzung geschützt, andrerseits werden das Klemmelement und das Stützelement zusammengehalten.

Weitere Besonderheiten und Vorzüge der Erfindung ergeben sich aus der folgenden Beschreibung eines bevorzugten Ausführungsbeispiels anhand der Zeichnung. Es zeigen:
- **Figur 1**: eine Steckverbindung in einer geschnittenen Explosionsansicht;
- **Figur 2**: die Steckverbindung von Figur 1 vor dem Einsetzen eines Anschlussrohrs in einem Längsschnitt;
- **Figur 3**: die Steckverbindung von Figur 1 mit eingesetztem und festgeklemmten Anschlussrohr in einem Längsschnitt;
- **Figur 4**: ein Klemmelement der Steckverbindung von Figur 1 in einer Perspektive;
- **Figur 5**: ein Stützelement der Steckverbindung von Figur 1 in einer Perspektive und
- **Figur 6**: ein Halteelement der Steckverbindung von Figur 1 in einer Perspektive.

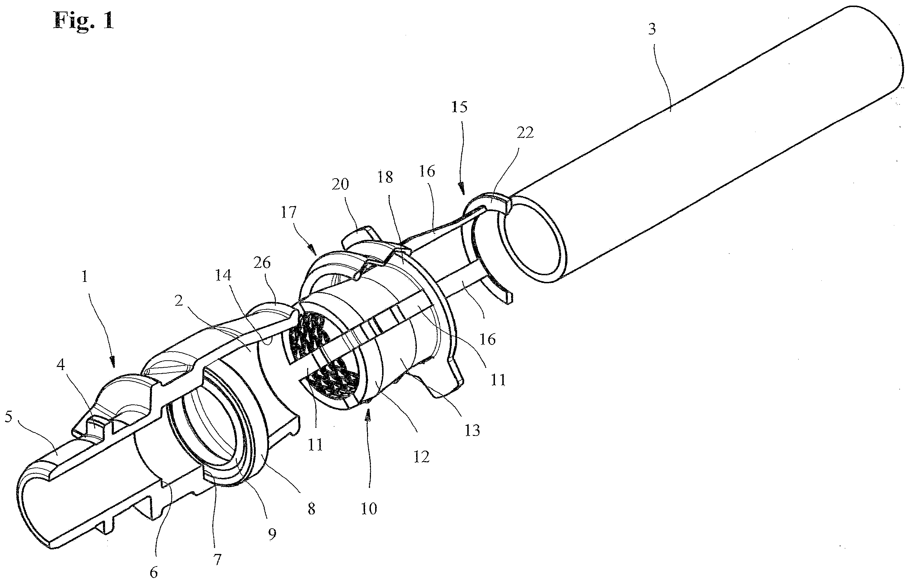

Die in Figur 1 in einer geschnittenen Explosionsansicht dargestellte Steckverbindung, die zum Anschluss von aus Kunststoff bestehenden Anschlussrohren an Hausanschlussarmaturen dient, enthält ein z.B. aus duktilem Gusseisen mit Epoxid-Beschichtung bestehendes hohlzylindrisches Gehäuse 1, das eine Aufnahmeöffnung 2 zum Einstecken eines z.B. aus Polyethylen, PEX oder einem anderen geeigneten Kunststoff bestehenden Anschlussrohrs 3 enthält. An der von der Aufnahmeöffnung 2 abgewandten Seite weist das Gehäuse 1 einen mit Kupplungselementen 4 einer Schnellkupplung, einem Gewinde oder anderen Anschlussteilen versehenen Anschlussstutzen 5 zum Anschluss des Gehäuses 1 an eine Rohrbrücke oder dgl. auf.

Die Aufnahmeöffnung 2 des Gehäuses 1 enthält einem inneren ringförmigen Absatz 6 als Anschlag für das Anschlussrohr 3 und einen inneren Ringabsatz 7 zur Anlage einer ringförmigen Dichtung 8. Die Dichtung 8 weist an ihrer Innenseite eine Dichtlippe 9 zur abdichtenden Anlage an der Außenseite des Anschlussrohrs 3 auf. Die Steckverbindung umfasst ferner ein in die Aufnahmeöffnung 2 des Gehäuses 1 einsteckbares hülsenförmiges Klemmelement 10, das durch Schlitze 11 voneinander getrennte, in Radialrichtung flexible Klemmsegmente 12 mit konischen Außenflächen 13 zur Anlage an einer konischen Anlagefläche 14 im Inneren der Aufnahmeöffnung 2 enthält. Die Steckverbindung umfasst ferner ein mit dem Klemmelement 10 zusammenwirkendes Stützelement 15, das voneinander beabstandete Haltezungen 16 zum Eingriff in die Schlitze 11 des Klemmelements 10 enthält. Dem Stützelement 15 ist außerdem ein hier als Schutzmanschette ausgebildetes und im Weiteren noch näher erläutertes Sicherungselement 17 zugeordnet.

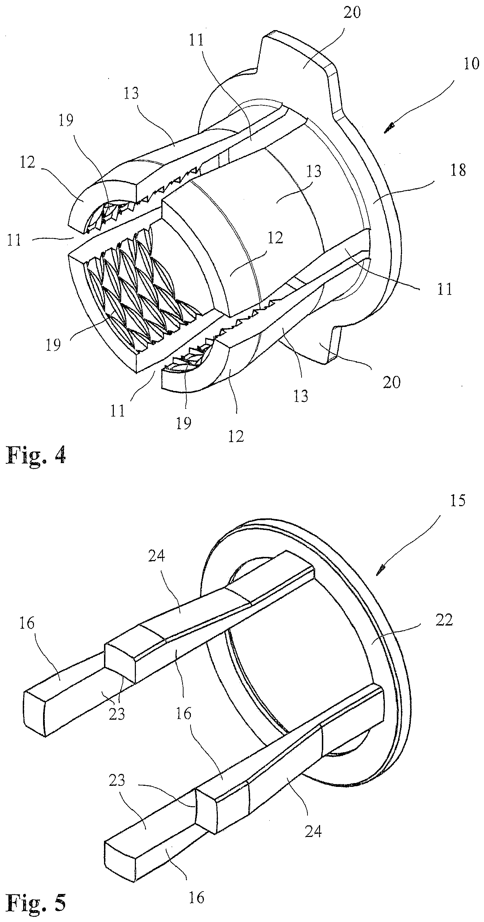

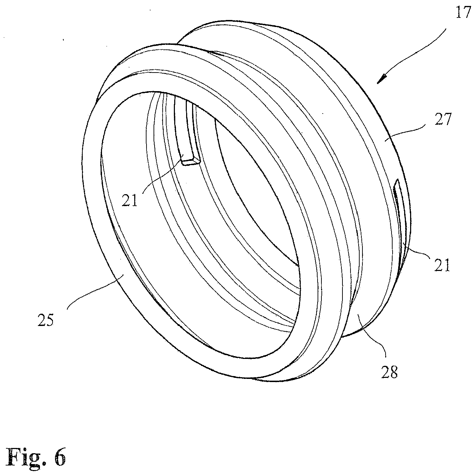

Wie aus Figur 4 hervorgeht, weist das in Art einer Spannzange bzw. Schlitzhülse ausgebildete und vorzugsweise aus Kunststoff hergestellte Klemmelement 10 bei der gezeigten Ausführung vier in Umfangsrichtung durch die Schlitze 11 voneinander getrennte, ringsegmentförmige Klemmsegmente 12 auf, die an ihrem einen Ende an einem Bundring 18 angeformt sind. An den anderen Enden der vom Bundring 18 auskragenden und radial federnden Klemmsegmente 12 sind innenseitige Haltezähne 19 angeformt. Die an der Außenseite der Klemmsegmente vorgesehenen konischen Außenflächen 13 sind zur Anlage an der entsprechend konischen inneren Anlagefläche 14 des Gehäuses 1 bestimmt. An der Außenseite des Bundrings 18 sind außerdem radial vorstehende Haltelaschen 20 zum Eingriff mit in Figur 6 dargestellten Ausnehmungen 21 des als Schutzmanschette ausgeführten Sicherungselements 17 angeformt.

Das in Figur 5 dargestellte Stützelement 15 enthält vier an einem Stützring 22 auskragend angeformte Haltezungen 16, deren Form an die Schlitze 11 des in Figur 4 gezeigten Klemmelements 10 angepasst ist. Die Haltezungen 16 sind ebenfalls radial federnd an dem Stützring 22 angeformt und derart ausgestaltet, dass sie das als Spannzange bzw. Schlitzhülse ausgebildete Klemmelement 10 beim Einstecken des Stützelements 15 zu einer das Anschlussrohr 3 nahezu vollständig umschließenden Klemmhülse ergänzen. Die Haltezungen weist innere runde Anlageflächen 23 zur Anlage an der Außenseite des Anschlussrohrs 3 und konische Außenflächen 24 zur Anlage an der konischen Anlagefläche 14 im Inneren der Aufnahmeöffnung 2 des Gehäuses 1 auf.

In Figur 6 ist das als Schutzmanschette ausgebildete Sicherungselement 17 gezeigt. Das Sicherungselement 17 enthält einen ringförmigen vorderen Bereich 25 zur Halterung auf einer in Figur 1 gezeigten Ringwulst 26 an dem mit der Aufnahmeöffnung 2 versehenen Ende des Gehäuses 1. Das Sicherungselement 17 weist ferner einen ringförmigen hinteren Bereich 27 zum Aufsetzen und zur Halterung am Bundring 18 des Klemmelements 10. In dem hinteren Bereich 27 sind auch die schlitzförmigen Ausnehmungen 21 für die Haltestege 20 vorgesehen. Zwischen den ringförmigen vorderen und hinteren Bereichen ist das vorzugsweise aus Gummi bestehende Sicherungselement 17 als zylindrischer Faltenbalg 28 ausgeführt.

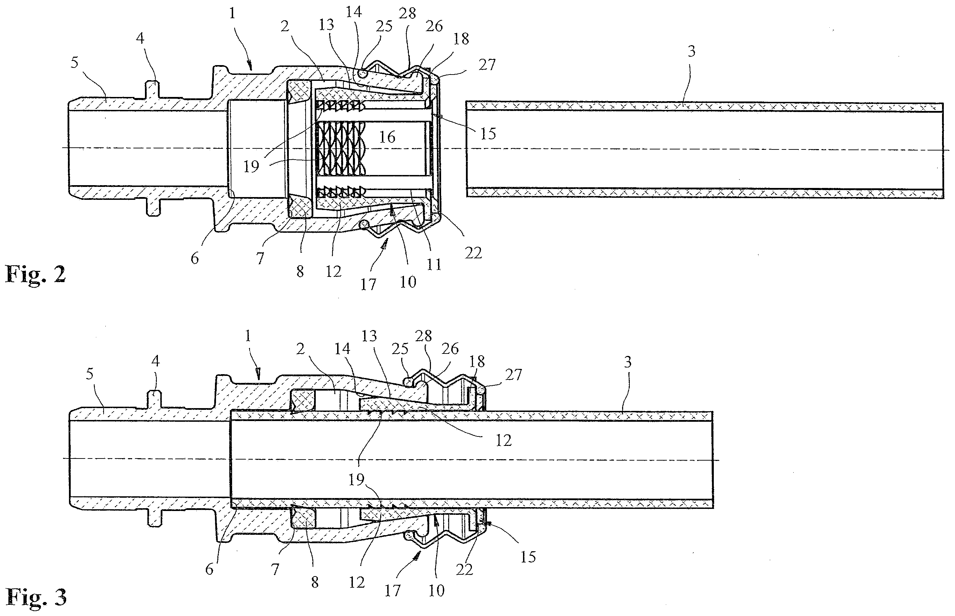

Im Folgenden wird die Funktionsweise und die Montage bzw. Demontage der vorstehend beschriebenen Steckverbindung anhand der Figuren 2 und 3 erläutert.

Die Steckverbindung kann als vormontierte und einbaufertige Einheit gemäß Figur 2 mit der in das Gehäuse 1 eingesetzten ringförmigen Dichtung 8, dem in das Gehäuse 1 eingesteckten hülsenförmigen Klemmelement 10, dem in das Klemmelement 10 eingesetzten Stützelement 15 und dem als Dichtmanschette ausgebildeten, auf das Gehäuse 1 aufgesteckten Sicherungselement 17 geliefert werden. Die federnden Klemmsegmente 12 des hülsenförmigen Klemmelements 10 können aufgrund der Schlitze 11 nach radial nach innen gedrückt werden, so dass das hülsenförmige Klemmelement 10 axial in die sich nach außen verengende Aufnahmeöffnung 2 des Gehäuses 1 eingesetzt werden kann. Anschließend wird das Stützelement 15 axial in das Klemmsegment 10 derart eingesetzt, dass die ebenfalls federnden Haltezungen 16 in die Schlitze 11 gelangen.

Wenn sich das Klemmelement 10 und das Stützelement 15 in der gemäß Figur 2 gezeigten eingeschobenen Stellung befinden und der Bundring 18 des Klemmelements 10 an der Stirnfläche des Gehäuse 1 anliegt, können die Klemmsegmente 12 und die Haltezungen 16 radial auffedern. Durch das als Schutzmanschette ausgebildete Sicherungselement 17 werden einerseits die innerhalb des Gehäuses 1 angeordneten Teile der Steckverbindung vor Verschmutzung geschützt, andrerseits werden das Klemmelement 10 und das Stützelement 15 beim Durchstecken der Haltestege 20 des Klemmelements 10 in die Ausnehmungen 21 des Stützelements 15 zusammengehalten. Da die Außenform des Sicherungselements 17 einem federnden Faltenbalg entspricht, wird für die Montage bzw. Demontage der Innenkomponenten der Steckverbindung eine ausreichende axiale Flexibilität erreicht.

Zur Montage des Anschlussrohrs 3 werden das Klemmelement 10 und das Stützelement 15 an den Haltestegen 20 des Klemmelements 10 nach innen in das Gehäuse 1 geschoben, bis der Bundring 18 an der Stirnfläche des Gehäuses 1 anliegt. Dadurch entsteht ein ausreichendes Spiel zwischen den konischen Außenflächen 13 und 24 der Klemmsegmente 12 bzw. Haltezungen 16 und der konischen Anlagefläche 14 an der Innenseite des Gehäuses 1, so dass die Klemmsegmente 12 und die Haltezungen 16 beim Einstecken des Anschlussrohrs 3 auffedern können. Das Anschlussrohr 3 wird durch die Dichtung 8 in das Gehäuse 1 eingeschoben, bis die Rohrstirnfläche an den Absatz 6 anstößt. Danach werden Klemmelement 10 und Stützelement 15 an der Haltestegen 20 axial nach außen gezogen, bis die konischen Außenflächen 13 und 24 der Klemmsegmente 12 bzw. Haltezungen 16 spielfrei an der der konischen inneren Anlagefläche 14 des Gehäuses 1 anliegen. Die Haltezähne 19 des Klemmelements 10 liegen nun direkt am Anschlussrohr 3 an. Jede weitere, an dem Anschlussrohr 3 angreifende Zugkraft führt zu Eindringen der Haltezähne 19 in das Anschlussrohr 3 und damit zum Aufbau einer Haltekraft.

Damit sich die Klemmsegmente 12 beim Zusammendrücken durch die Reaktionskräfte zwischen konischen Außenflächen 13 und den konischen inneren Anlagefläche 14 des Gehäuses 1 nicht beliebig weit radial nach innen bewegen können, was zu einer polygonalen Verformung des Anschlussrohrs und ggf. zu einem Herausziehen des Klemmelements 10 aus dem Gehäuse 1 führen könnte, liegen die Haltezungen 16 des Stützelements 15 in den Schlitzen 11 des Klemmelements 10. Diese blockieren durch radiale Anlage eine übermäßige Verformung der gesamten Einheit und verhindern damit das axiale Herausziehen des Anschlussrohrs 3.

Zur Demontage des Anschlussrohrs 3 müssen nur das Klemmelement 10 und das Stützelement 15 axial in das Gehäuse 1 geschoben werden, bis der Bundring 18 an der Stirnfläche des Gehäuses 1 anliegt. Dadurch entsteht genügend Spiel zwischen den konischen Außenflächen 13 und 24 der Klemmsegmente 12 bzw. Haltezungen 16 und der konischen inneren Anlagefläche 14 des Gehäuses 1, so dass die Klemmsegmente 12 und die Haltezungen 16 auffedern können. Dadurch wird die Klemmung zwischen den Haltezähnen 19 und dem Anschlussrohr 3 aufgehoben, so dass dieses aus dem Gehäuse 1 herausgezogen werden kann.

Nach einer Demontage eines Anschlussrohrs 3 müssen das Klemmelement 10 und das Stützelement 15 vor einer erneuten Montage ausgewechselt werden, da die Haltezähne 19 in der Regel vorgeschädigt sind. Dabei wird zunächst das als Schutzmanschette ausgeführte Sicherungselement 17 vom Gehäuse 1 abgezogen und dann das Stützelement aus dem Gehäuse 1 herausgezogen. Nachdem die Haltezungen 16 aus den Schlitzen 11 des Klemmelements 10 entfernt sind, können die Klemmsegmente 12 wieder nach innen federn und das Klemmelement 10 kann aus der Aufnahmeöffnung 2 des Gehäuses 1 herausgezogen werden.

## Patentansprüche

1. Steckverbindung, die ein Gehäuse (1) mit einer Aufnahmeöffnung (2) zum Einsetzen eines Anschlussrohrs (3) und ein in der Aufnahmeöffnung (3) angeordnetes Anschlussteil zur Halterung des Anschlussrohrs (3) im Gehäuse (1) umfasst, wobei das Anschlussteil ein an das Anschlussrohr (3) anlegbares Klemmelement (10) mit mehreren durch Schlitze (11) voneinander getrennten Klemmsegmenten (12) und ein mit dem Klemmelement (10) zusammenwirkendes Stützelement (15) mit voneinander beabstandeten Haltezungen (16) zum Eingriff in die Schlitze (11) des Klemmelements (10) aufweist und wobei die Klemmsegmente (12) des Klemmelements (10) konische Außenflächen (13) zur Anlage an einer konischen Innenfläche (14) der Aufnahmeöffnung (2) enthalten, **dadurch gekennzeichnet, dass** die Haltezungen (16) an ihrer Außenseite konische Außenflächen (24) zur Anlage an der konischen Innenfläche (14) der Aufnahmeöffnung (2) aufweisen und die Klemmsegmente (12) des Klemmelements (10) an einem Bundring (18) angeformt sind.

2. Steckverbindung nach Anspruch 1, **dadurch gekennzeichnet, dass** die Haltezungen (16) des Stützelements (15) an einem Stützring (22) angeformt sind.

3. Steckverbindung nach Anspruch 1 oder 2, **dadurch gekennzeichnet, dass** an der Innenseite der Klemmsegmente (12) Haltezähne (19) vorgesehen sind.

4. Steckverbindung nach einem der Ansprüche 1 bis 3, **dadurch gekennzeichnet, dass** das Klemmelement (10) und das Stützelement (15) aus Kunststoff hergestellt sind.

5. Steckverbindung nach einem der Ansprüche 1 bis 4, **dadurch gekennzeichnet, dass** dem Klemmelement (10) ein Sicherungselement (17) zugeordnet ist.

6. Steckverbindung nach Anspruch 5, **dadurch gekennzeichnet, dass** das Sicherungselement (17) als Schutzmanschette mit einem zylindrischen Faltenbalg (28) ausgebildet ist.

7. Steckverbindung nach Anspruch 5 oder 6, **dadurch gekennzeichnet, dass** das Sicherungselement (17) einen ringförmigen vorderen Bereich (25) zur Halterung auf einer Ringwulst (26) des Gehäuses (1) enthält.

8. Steckverbindung nach einem der Ansprüche 5 bis 7, **dadurch gekennzeichnet, dass** das Sicherungselement (17) einen ringförmigen hinteren Bereich (27) zum Aufsetzen und zur Halterung am Klemmelement (10) enthält.

9. Steckverbindung nach einem der Ansprüche 5 bis 8, **dadurch gekennzeichnet, dass** das Sicherungselement (17) schlitzförmige Ausnehmungen (21) zum Eingriff von Haltestegen (20) des Klemmelements (10) enthält.

10. Steckverbindung nach einem der Ansprüche 1 bis 9, **dadurch gekennzeichnet, dass** die Aufnahmeöffnung (2) des Gehäuses (1) einen inneren ringförmigen Absatz (6) als Anschlag für das Anschlussrohr (3) und einen inneren Ringabsatz (7) zur Anlage einer ringförmigen Dichtung (8) enthält.

## Claims

1. Connector comprising a housing (1) with a receiving opening (2) for insertion of a connecting pipe (3) and a connecting part arranged in the receiving opening (3) for holding the connecting pipe (3) in the housing (1), wherein the connecting part has a clamping element (10) which can be applied to the connecting pipe (3) with a plurality of clamping segments (12) separated from one another by slots (11) and a supporting element (15) cooperating with the clamping element (10) with mutually spaced retaining tongues (16) for engagement in the slots (11) of the clamping element (10) and wherein the clamping segments (12) of the clamping element (10) comprise conical external faces (13) for bearing on a conical internal face (14) of the receiving opening (2), **characterised in that** on their outside the retaining tongues (16) have conical external faces (24) for bearing on the conical internal face (14) of the receiving opening (2) and the clamping segments (12) of the clamping element (10) are formed on a collared ring (18).

2. Connector according to claim 1, **characterised in that** the retaining tongues (16) of the supporting element (15) are formed on a supporting ring (22).

3. Connector according to claim 1 or 2, **characterised in that** retaining teeth (19) are provided on the inside of the clamping segments (12).

4. Connector according to one of claims 1 to 3, **characterised in that** the clamping element (10) and the supporting element (15) are made of plastic.

5. Connector according to one of claims 1 to 4, **characterised in that** the clamping element (10) has an associated locking element (17).

6. Connector according to claim 5, **characterised in that** the locking element (17) is embodied in the form of a protective sleeve (54) with a cylindrical folding bellows (28).

7. Connector according to claim 5 or 6, **characterised in that** the locking element (17) comprises a ring-shaped front region (25) for retention on a ring-shaped bead (26) of the housing (1).

8. Connector according to one of claims 5 to 7, **characterised in that** the locking element (17) comprises a ring-shaped rear region (27) for mounting and for retention on the clamping element (10).

9. Connector according to one of claims 5 to 8, **characterised in that** the locking element (17) comprises slot-shaped recesses (21) for engagement of retaining lugs (20) of the clamping element (10).

10. Connector according to one of claims 1 to 9, **characterised in that** the receiving opening (2) of the housing (1) comprises an inner ring-shaped shoulder (6) serving as a stop for the connecting pipe (3) and an inner ring-shaped shoulder (7) for bearing on a ring-shaped gasket (8).

## Revendications

1. Liaison enfichable qui comporte un boîtier (1) avec une ouverture de réception (2) pour l'insertion d'un tube de raccordement (3) et une partie de raccordement agencée dans l'ouverture de réception (3) pour le support du tube de raccordement (3) dans le boîtier (1), dans laquelle la partie de raccordement présente un élément de serrage (10) pouvant être posé contre le tube de raccordement (3) avec plusieurs segments de serrage (12) séparés les uns des autres par des fentes (11) et un élément d'appui (15) coagissant avec l'élément de serrage (10) avec des languettes de retenue (16) espacées les unes des autres pour la mise en prise avec les fentes (11) de l'élément de serrage (10) et dans laquelle les segments de serrage (12) de l'élément de serrage (10) contiennent des surfaces extérieures (13) coniques pour l'appui contre une surface intérieure (14) conique de l'ouverture de réception (2), **caractérisée en ce que** les languettes de retenue (16) présentent, sur leur côté extérieur, des surfaces extérieures (24) coniques pour l'appui contre la surface intérieure (14) conique de l'ouverture de réception (2) et les segments de serrage (12) de l'élément de serrage (10) sont formés sur un collet (18).

2. Liaison enfichable selon la revendication 1, **caractérisée en ce que** les languettes de retenue (16) de l'élément d'appui (15) sont formées sur un anneau d'appui (22).

3. Liaison enfichable selon la revendication 1 ou 2, **caractérisée en ce que** des dents de retenue (19) sont prévues sur le côté intérieur des segments de serrage (12).

4. Liaison enfichable selon l'une quelconque des revendications 1 à 3, **caractérisée en ce que** l'élément de serrage (10) et l'élément d'appui (15) sont fabriqués en matière plastique.

5. Liaison enfichable selon l'une quelconque des revendications 1 à 4, **caractérisée en ce qu'**un élément de fixation (17) est associé à l'élément de serrage (10) .

6. Liaison enfichable selon la revendication 5, **caractérisée en ce que** l'élément de fixation (17) est réalisé comme une manchette de protection avec un soufflet cylindrique (28).

7. Liaison enfichable selon la revendication 5 ou 6, **caractérisée en ce que** l'élément de fixation (17) contient une zone avant annulaire (25) pour le support sur un bourrelet annulaire (26) du boîtier (1).

8. Liaison enfichable selon l'une quelconque des revendications 5 à 7, **caractérisée en ce que** l'élément de fixation (17) contient une zone arrière annulaire (27) pour le placement et le support sur l'élément de serrage (10).

9. Liaison enfichable selon l'une quelconque des revendications 5 à 8, **caractérisée en ce que** l'élément de fixation (17) contient des évidements en forme de fente (21) pour la mise en prise de nervures de retenue (20) de l'élément de serrage (10).

10. Liaison enfichable selon l'une quelconque des revendications 1 à 9, **caractérisée en ce que** l'ouverture de réception (2) du boîtier (1) contient un épaulement (6) annulaire intérieur en tant que butée pour le tube de raccordement (3) et un épaulement annulaire intérieur (7) pour l'appui d'une garniture annulaire (8).
